# EUROPEAN PATENT SPECIFICATION

(11) **EP 1 022 956 B1**
(45) Date of publication and mention of the grant of the patent: **18.12.2002**
(21) Application number: 98950522.7
(22) Date of filing: 15.10.1998
(51) Int. Cl.: A23B 4/044, A23L 3/3409

(54) **METHOD FOR THE PRODUCTION OF CAVIAR**
HERSTELLUNGSVERFAHREN FUER KAVIAR
PROCEDE DE PRODUCTION DE CAVIAR

(30) Priority: 17.10.1997 NO 480097
(43) Date of publication of application: 02.08.2000
(73) Proprietor: AS Forma, 0558 Oslo (NO)
(72) Inventor: EIDE, Ola, N-0667 Oslo (NO); STORRO, Ivar, N-7033 Trondheim (NO); OFSTAD, Ragni, N-1266 Oslo (NO); FONSTAD, Mona, Harstadhaugen, N-0591 Oslo (NO)
(74) Representative: Flaccus, Rolf-Dieter, Dr.
(86) International application number: NO9800314
(87) International publication number: WO99020118

(56) References cited:
- US-A- 4 181 739
- WPI/DERWENT, AN 88-290563, ARON WORLD K.K. et al., "Prepn. of Smoked Alaska Pollack Roe - by Washing Raw Roe with Water, Immersing in Colouring and Salting Soln., Immersing in Seasoning Soln. and Cold Smoking"; & JP 63214138 A (06-09-88).
- WPI/DERWENT, AN 89-089690, NICHIRO GYOGYO K.K., "Prepn. of Dried Mullet Roe Like Food - by Removing Skin from Roe, Spreading Common Salt on Roe, Immersing in Salt for 3 to 5 Hours, Smoking etc"; & JP 1039970 A (10-02-89).

## Description

The present invention relates to a method for producing caviar wherein, after slaughtering, salting, optional transport and separation of roe, and separation of brine and refuse, the roe is smoked and worked together with other ingredients into a caviar.

The raw material for caviar is roe.

In today's conventional processes, after the fish is slaughtered the roe is sent on to sugar salting, which process is carried out on whole roe sacks where the sacks are manually placed into 120-kilo barrels.

Damaged roe is discarded, and this already represents a considerable loss of raw material.

The filled barrels are then kept at cooling room temperature for several months prior to production to await the maturation of the roe.

The sugar salting is a laborious method, and salting of whole roe sacks is problematic because relatively large roe sacks have a tendency to sour. This is because it takes far too long for the salt to penetrate into the core of the roe sack and provide a preservative salt concentration.

The intention of the present invention is not to use the roe in the form of whole roe sacks, but to process the roe on the basis of roe granules. In so doing, the roe sacks are cut up so that the roe granules are released, whereafter a salt and sugar mixture is added. As indicated above, this also enables the utilization of roe sacks which have been damaged in slaughtering.

The invention is as defined in claim 1.

The advantage of processing the roe on a granular basis is that the diffusion path for the salt is reduced from several centimeters to 0.5 mm.

This means that the time required to obtain equilibrium for salt penetration is estimated as being about 2000 times faster for the salting of roe granules instead of salting of whole roe sacks.

The currently existing salting process is very demanding in terms of manual labor, while the process described according to the present application can be carried out mechanically.

In the following the invention will be explained in more detail, viewed in relation to the known art, with the aid of the attached figures, wherein:
- Figure 1 illustrates a conventional caviar production process as carried out today;
- Figure 2 shows the first alternative method according to the invention; and
- Figure 3 shows another embodiment of the inventive method where the smoking is integrated into the emulsification stage.

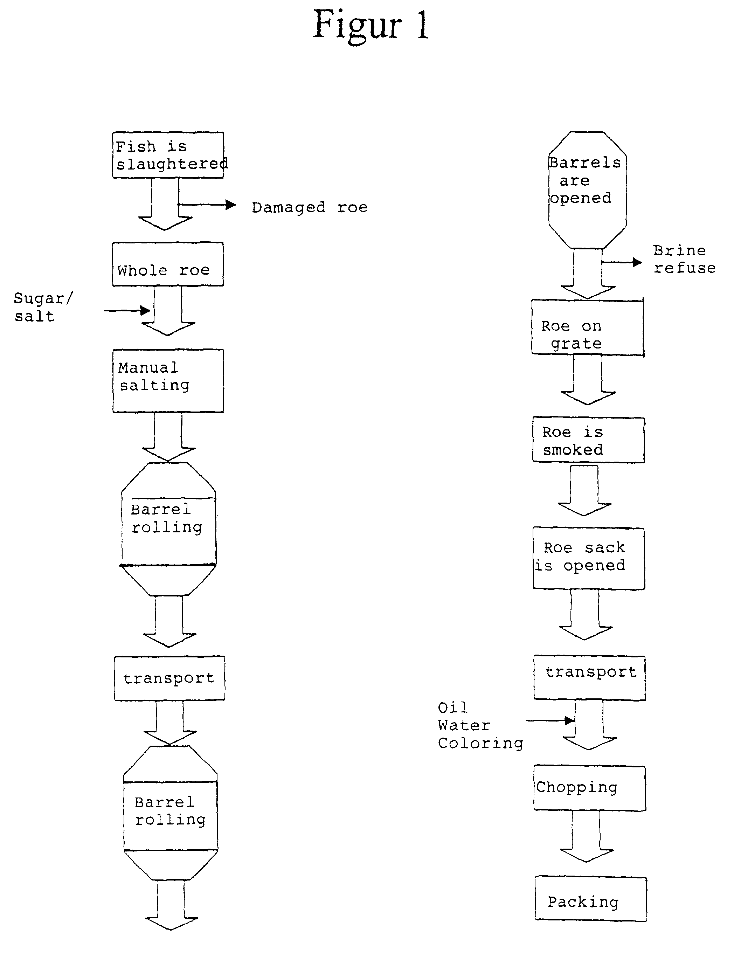

The conventional mode of caviar production is illustrated in Figure 1. After the aforementioned manual filling of 120-kilo barrels with whole roe sacks, the barrels must be rolled and turned over at regular intervals several times per week during the first month. This is done manually and is a difficult task. The reason such turning is needed is that the salt sinks to the bottom of the barrels, and the rolling and turning are intended to restore a homogeneous salt ratio in the barrel.

By working with roe granules one immediately achieves a homogeneous situation and further treatment is not necessary. In the subsequent stage of the conventional process, the barrels are emptied by hand, with each individual roe sack being plucked out and prepared for smoking.

In the total process described herein, the roe granules constitute a pumpable mass which can be moved by means of pumping.

By already working with roe granules rather than whole roe sacks from the start of the process, one avoids having to store sugar-salted roe in barrels and freighting the roe between the fish receiving facility and the factory in barrels. As a pumpable mass the roe mass according to the invention is easily movable in and between containers and stored in containers of selected size and shape. Transport between the fish receiving facility and the factory can be done by tank truck, if desired.

As mentioned above, roe granules constitute the principal raw material for caviar. Caviar is produced by emulsifying roe and soya oil plus smaller additive amounts of sugar and coloring and other optional conventional auxiliaries. During the emulsification process individual roe granules are crushed, and the contents of the emulsifiers (lipovitellin, phosphovitin) are released and contribute to the formation of an oil-in-water emulsion. In the emulsification process some of the roe granules are crushed and water and emulsifier are released. How great a portion of the roe granules that is crushed depends on a number of factors. The most important are the strength and the sheering force effect of the roe granules during emulsification. The amount of emulsifier released in each production batch is therefore not easy to control. By carrying out the entire caviar production on the basis of the use of roe granules rather than roe sacks, it is possible through a "steady state" process to utilize a known quantity of roe granules as emulsifier. The roe granules may either be added whole and crushed during the emulsification process, or they may be crushed externally. If dried roe granules (preferably crushed) are used, then additional water must be added, and one thereby achieves a good control over the water quantity and the ratio of emulsifier to water.

For caviar production according to the invention, the roe must be smoked, which conventionally has been done by smoking whole roe sacks as mentioned in the introduction herein. From a chemical-technical point of view, this is not an optimal process, and the present applicants have found a new method for smoking roe in the form of granules, which process is described in the parallel NO-P-19974799.

The parallel application is based on a wet-smoking process whereby the roe granules are smoked while suspended in a water phase, and wherein smoke from a smoke generator is passed through the water phase. The water soluble compounds in the smoke will thereby be absorbed in the water phase while the fat soluble compounds will be absorbed in the fat phase. To obtain the desired results, the smoke may optionally be recirculated.

In this manner a much better utilization of the smoke is achieved than by the utilization of conventional smoking.

The present invention is based on the use of roe granules already from the start of the process, as opposed to the use of whole roe sacks in accordance with the known art.

The present method therefore relates to a method for producing caviar or similar products where, after slaughtering, salting, optional transport and separation of roe, and separation of brine and refuse, the roe is smoked and processed, and this method is characterized in that whole and damaged roe is smoked in the form of granules and incorporated with an emulsion of oil, water, coloring, potato flour and other conventional ingredients, wherein the smoking may take place as a separate stage for wet-smoking the roe particles in a suspension in water, or it may be done by supplying the smoke directly to the emulsification stage for the roe particles with the rest of the ingredients in the end product.

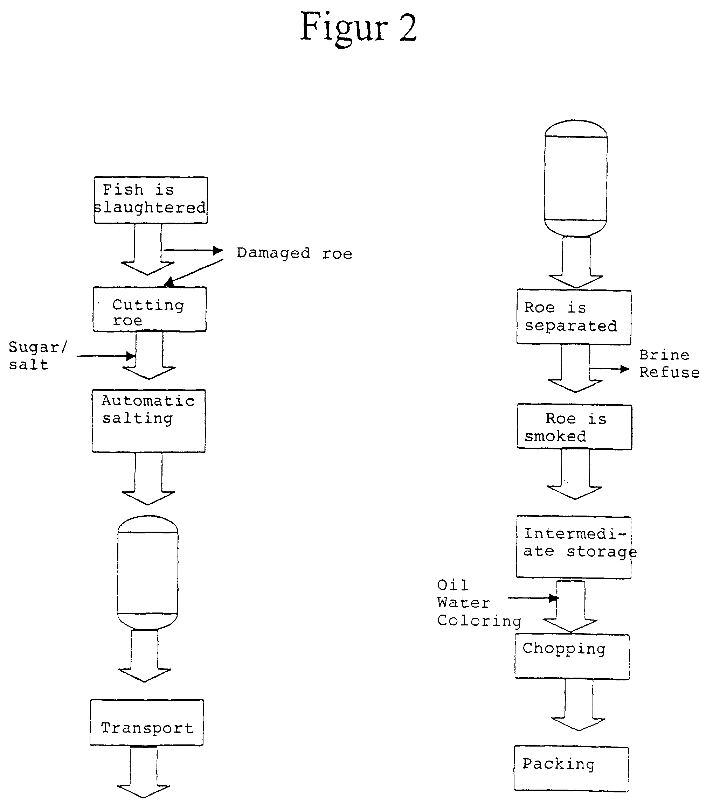

As is apparent from the flow chart in the attached Figure 2, both whole and damaged roe, preferably in cut-up form, i.e., in the form of roe granules, is brought to an automatic salting stage as opposed to the known art's manual placement in barrels.

This means that the roe is in the form of a pumpable mass which, as described above, either may be pumped directly to caviar production or may be pumped into transport containers for further pumping to caviar production.

At the production site the brine and refuse are separated and, in one embodiment of the invention, the roe is smoked in the form of granules, preferably by the method described in the parallel application NO-P-19974799.

Via optional intermediate storage, the final caviar production is then carried out.

This is done by the above described emulsification process whereby roe granules and soya oil plus other optional additives such as sugar and coloring are emulsified.

Emulsification of oil-in-water with roe emulsifier as indicated above for the production of caviar may be carried out without the presence of whole roe granules. This type of emulsification affords a greater freedom in the choice of emulsification method and processing conditions. When using roe granules as an emulsifier source, one does not face the same limitations in the sheering force effect that are seen in traditional methods because the emulsification takes place without the presence of whole roe granules.

After the initial emulsification is achieved, as described above, whole roe granules are then carefully blended into the emulsion. By this method it is possible to control the concentration of whole roe granules so that the consumer experiences uniform high quality over time.

In addition to the separate smoking of roe granules prior to their being blended into the finished emulsion, it is possible in the second embodiment of the invention to carry out an integrated smoking process whereby the roe granules, after separation of brine and refuse, are introduced directly into the finished emulsion of oil-in-water, coloring, potato flour, and other optional ingredients, and where the smoke from a suitable smoke generator is supplied directly so that the granules are smoked in the emulsion.

In principle, this wet-smoking is carried out in the same manner as is described in NO-P-19974799 in that here, also, used smoke may optionally be recirculated in order to achieve maximum utilization of all the components in the smoke.

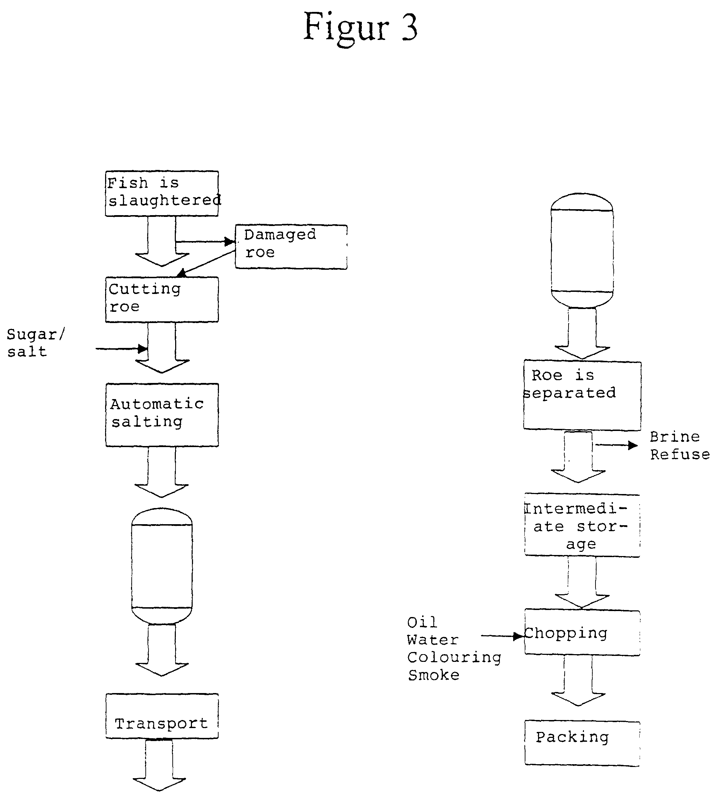

This integrated smoking process is outlined in Figure 3.

By employing the method of the invention, i.e., by basing the entire production on processing of roe granules rather than whole roe sacks, many advantages are attained.

Roe is currently aged for several months before it can be used for production. Several properties of the roe should, however, be optimal for production, and experiments have indicated that these properties are not all at their prime at the same point in the ageing process.

In the method proposed according to the present invention, which is based on roe granules, the maturation of the roe can be stopped at the point in time that is optimal for the function the roe fraction is intended to fulfill.

The roe that is to be used for emulsification is measured so that the emulsification capability is optimal; roe granules to be used whole in the caviar may be aged until their shell strength, flavor and stabilization properties are optimal. This processing of roe in the form of granules thus enables more optimal exploitation of the properties of the roe, more optimally, at the same time as the production costs can be reduced substantially as a result of a considerably shorter ageing period and simplified and automated handling.

By the further integration of the wet-smoking process as described in NO-P-19974700. additional savings and improvements in quality are attained.

## Claims

1. A method for producing caviar wherein, after slaughtering, salting, optional transport and separation of roe, and separation of brine and refuse, the roe is smoked and processed, **characterized in that** whole and damaged roe is smoked in the form of granules and incorporated with an emulsion of oil, water, coloring, potato flour and optional other conventional ingredients, wherein said smoking may take place as a separate stage for wet-smoking the roe particles in a suspension in water, or it may be done by supplying the smoke directly to the emulsification stage for the roe particles with the rest of the ingredients being added after the smoking step to result in the end product.

## Patentansprüche

1. Verfahren zur Herstellung von Kaviar, bei dem nach dem Schlachten, Salzen, optionalen Transport und Trennung des Rogens, und der Trennung der Sole und des Abfalls, der Rogen in Form eines Granulates geräuchert und in eine Emulsion aus Öl, Wasser, Farbstoff, Kartoffelmehl und wahlweise anderen Ingredienzien eingearbeitet wird, wobei das Räuchern als separate Stufe zum Nassräuchern der Rogenpartikel in einer Suspension in Wasser oder durch direkte Zufuhr des Rauchs zur Emulgierungsstufe der Rogenpartikel erfolgen kann, wobei dann die restlichen Ingredienzien nach dem Räucherungsschritt hinzugefügt werden, um das Endprodukt zu erhalten.

## Revendications

1. Procédé de production de caviar, dans lequel, après abattage, salage, transport et séparation optionnels des oeufs, et séparation de la saumure et des déchets, les oeufs sont fumés et traités, **caractérisé en ce que** les oeufs entiers et endommagés sont fumés sous forme de granules et incorporés dans une émulsion d'huile, d'eau, de colorant, de fécule de pomme de terre et d'autres ingrédients conventionnels optionnels, dans lequel ladite fumaison peut être réalisée comme une étape séparée pour fumer en phase humide les particules d'oeufs en suspension dans de l'eau, ou elle peut être faite en appliquant la fumée directement lors de l'étape d'émulsification pour les particules d'oeufs avec le reste des ingrédients ajoutés après l'étape de fumaison pour aboutir au produit final.
